# EUROPEAN PATENT SPECIFICATION

(11) **EP 3 527 645 B1**
(45) Date of publication and mention of the grant of the patent: **27.05.2020**
(21) Application number: 17898809.3
(22) Date of filing: 13.06.2017
(51) Int. Cl.: C10J 3/50, C10J 3/48

(54) **IN-GASIFIER SELF-CIRCULATING FLUIDISED BED GASIFIER AND STEPPED CONSTRAINED WIND AIR-DISTRIBUTION PLATE THEREIN**
IM VERGASER SELBST ZIRKULIERENDER WIRBELSCHICHTVERGASER UND DARIN ANGEORDNETE ABGESTUFTE ZWANGSWINDLUFTVERTEILUNGSPLATTE
GAZÉIFICATEUR À LIT FLUIDISÉ AUTO-CIRCULANT DANS LE GAZÉIFICATEUR ET PLAQUE ÉTAGÉE DE DISTRIBUTION D'AIR À VENT FORCÉ DISPOSÉE EN SON SEIN

(30) Priority: 01.03.2017 CN 201710116272; 01.03.2017 CN 201710116686
(43) Date of publication of application: 21.08.2019
(73) Proprietor: Zhongkejuxin Clean Energy & Hot Forging Equipment Research And Development Co., Ltd., Yanchen, Jiangsu 224700 (CN)
(72) Inventor: ZHANG, Lianhua, Yanchen Jiangsu 224700 (CN); CHEN, Baijin, Yanchen Jiangsu 224700 (CN); WANG, Ji, Yanchen Jiangsu 224700 (CN); ZHANG, Hui, Yanchen Jiangsu 224700 (CN); Qiu, Yunlong, Yanchen Jiangsu 224700 (CN)
(74) Representative: Sun, Yiming
(86) International application number: PCT/CN2017/088042
(87) International publication number: WO 2018/157502

(56) References cited:
- CA-A- 1 095 876
- CN-A- 1 597 846
- CN-A- 101 571 288
- CN-A- 106 753 580
- CN-A- 106 753 581
- CN-U- 201 539 855
- CN-U- 206 494 910
- CN-U- 206 494 911
- CN-Y- 201 074 223
- CN-Y- 201 261 774
- KR-B1- 101 406 660

## Description

### TECHNICAL FIELD

The present invention relates to the technical field of gasifier technologies, and particularly to an internally self-circulating fluidized bed gasifier and an air distributor therein for generating a stepped constrained wind, which is a special-purpose component of a coal gasification apparatus.

### BACKGROUND

With the continuous progression of the society, thermal energy is increasingly needed. Generally, thermal energy is traditionally acquired by direct coal burning, which however results in a large number of contaminants, thus greatly affecting people's living environment. Therefore, Chinese government has issued a large number of documents on prohibiting direct coal burning for obtaining thermal energy. To this end, a variety of gasifiers that convert raw coal into coal gas have been designed, so that the way of obtaining energy is changed to converting raw coal to coal gas by burning. Gasifiers for producing coal gas such as a fixed bed and a circulating fluidized bed, such as described for instance in CN201539855 and CN201261774, have reduced pollution of burning on the environment to some extent. However, when going deep into various forms of existing gasifiers, it has been found that each gasifier has its advantages and disadvantages. For example, the fixed bed gasifier has a high coal conversion rate and a high thermal efficiency, but the generated coal gas contains a large number of contaminants such as tar. The circulating fluidized bed gasifier can produce clean coal gas that does not contain contaminants such as tar, but it has low thermal efficiency of raw coal, coal slag contains a large amount of semi-coke, and coke-containing coal slag needs to be transported to a burning environment with low requirements for re-burning such as a raw material burnt in a thermal power plant. To solve the above problems, those focusing on coal gas researches have designed a combined gasifier that is a combination of the circulating fluidized bed and a pyrolysis gasification bed, which not only is free of contaminants such as tar during burning and gasification, but also can substantially increase coal burning and gasification efficiency. This design has two shortcomings: one is that a gasification temperature within a furnace chamber of the circulating fluidized bed is hardly ensured due to a decrease in the number of circulations in the circulating fluidized bed, and thus a burning temperature cannot be achieved at which no tar is generated from bulky coal briquettes; the other is that no deslagging means is provided at the bottom of the furnace chamber of the circulating fluidized bed, so non-coal substances with relatively high mass tend to be retained at the bottom of the gasifier.

Therefore, there is a need for a new technical solution to solve the above problems.

### SUMMARY

A first objective of the present invention is to provide an internally self-circulating fluidized bed gasifier, which can achieve self-circulation combustion gasification multiple times within the gasifier and has advantages such as well control of gasification temperature within the gasifier, a high coal gasification efficiency and no ash leakage.

A second objective of the present invention is to provide an air distributor for generating a stepped constrained wind for a circulating fluidized bed gasifier. By providing arrangement of winding paths of the vent holes of the air distributor and converging the outlets of the vent holes to the same large hole channel, the air distributor enables a gas entering the gasifier to form a stepped constrained wind and effectively prevents solid-phase materials in a furnace chamber from leaking into a gas mixture chamber.

According to one aspect of the present invention, the present invention provides an air distributor, as defined in claim 1, for generating a stepped constrained wind in a circulating fluidized bed gasifier. The air distributor includes an air distributor body, a gas-material mixture through hole and a plurality of vent holes located within the air distributor body. The gas-material mixture through hole extends from a top surface of the air distributor body into the air distributor body, outlets of the plurality of vent holes is in communication with a bottom of the gas-material mixture through hole, and inlets of the plurality of vent holes is located at a bottom surface of the air distributor body. The vent holes are designed to have winding paths. The stepped constrained wind has a higher flow rate in the middle and a lower flow rate in the periphery, such that an internally circulating flow is formed within the furnace chamber in which a middle constrained gas moves upwardly and a periphery gas stream overflows downwardly.

Further, the gas-material mixture through hole comprises a cylindrical hole and a hollow frustum tapering from bottom to top, an upper port of the cylindrical hole is located at the top surface of the air distributor body, and a lower port of the cylindrical hole is connected to an upper edge of the hollow frustum, and wherein the hollow frustum serving as a connection portion of the gas-material mixture through hole is in communication with the outlets of the plurality of vent holes.

Further, the hollow frustum is provided as a sealing cap; the bottom of the gas-material mixture through hole is a flat surface which is provided as a material blocking platform; or the bottom surface of the air distributor body is a spherical arch face recessed towards the air distributor body.

Further, each vent hole comprises a diverging section, a vertical section and a horizontal section in sequence from the inlet thereof to the outlet thereof; or each vent hole comprises a diverging section and a horizontal section in sequence from the inlet thereof to the outlet thereof.

Further, inclination of each of the sections of the vent hole is designed according to requirements for a gas amount and a gas speed, as well as a deposition speed, a diameter and/or a density of a solid-phase particle in the circulating fluidized bed gasifier.

According to another aspect of the present invention, the present invention provides an internally self-circulating fluidized bed gasifier as described in claim 6. The internally self-circulating fluidized bed gasifier includes a gasifier body and a furnace inner chamber enclosed by the gasifier body. The furnace inner chamber comprises a furnace chamber provided at an upper part thereof and an air distributor provided at a lower part of the furnace chamber. The internally self-circulating fluidized bed gasifier further includes a gas mixture chamber provided at a lower part of the air distributor as described above. The gas-material mixture through hole is in communication with the bottom of the furnace chamber, and the inlets of the vent holes are in communication with the gas mixture chamber.

Further, as stated in claim 7, the gas-material mixture through hole is located in the center of the bottom of the furnace chamber; the furnace chamber is of an inverted frustum structure tapering from top to bottom; or the gas mixture chamber is configured for pre-burning.

Further, the internally self-circulating fluidized bed gasifier further includes a coal transport pipe provided in the middle of the furnace chamber and a high temperature gas-material pipe provided at an upper part of the furnace chamber. The coal transport pipe is in communication with the furnace chamber, an inlet of the high temperature gas-material pipe is in communication with the furnace chamber, and an outlet of the high temperature gas-material pipe is in communication with a subsequent device.

Further, the internally self-circulating fluidized bed gasifier further includes a material guide platform provided within the furnace chamber and located at the inlet of the high temperature gas-material pipe. A surface of the material guide platform faces upward, an upper surface of the material guide platform is an arc surface, and the arc surface is connected to a lower part of an inner wall of the high temperature gas-material pipe, such that materials within the furnace chamber that fall on the material guide platform can smoothly enter the subsequent device along the inner wall of the high temperature gas-material pipe.

According to another aspect of the present invention is provided, as described in claim 15, a method of operating the internally self-circulating fluidized bed gasifier of claim 7, wherein a high temperature gas-material mixture generated from the pre-burning within the gas mixture chamber enters the vent holes via the inlets at a lower end of the vent holes firstly, is ejected from the outlets at an upper end of the vent holes subsequently, and then enters the gas-material mixture through hole for bundling and rushing to the furnace chamber, and wherein the high temperature gas-material mixture entering the furnace chamber from the gas-material mixture through hole forms a stepped constrained wind with a higher flow rate in the middle and a lower flow rate on the periphery, such that an internally circulating flow is formed within the furnace chamber in which a middle constrained gas stream moves upwardly and a periphery gas stream overflows downwardly.

Further, the internally self-circulating fluidized bed gasifier further includes a gasification agent pipe which is in communication with the gas mixture chamber and is configured to introducing a gasification agent to the gas mixture chamber.

Further, the internally self-circulating fluidized bed gasifier further includes a pulverized coal transport pipe and/or a carbon-containing fly ash transport pipe in communication with the gas mixture chamber. The pulverized coal transport pipe is configured to transport pulverized coal to the gas mixture chamber; the carbon-containing fly ash transport pipe is configured to transport carbon-containing fly ash to the gas mixture chamber, and the high temperature gas-material mixture comprises the gasification agent and a coal gas with high temperature carbon-containing fly ash that is generated from pre-burning of the gasification agent, the carbon-containing fly ash and the pulverized coal.

Further, the gas-material mixture through hole comprises a cylindrical hole and a hollow frustum tapering from bottom to top, an upper port of the cylindrical hole is located at the top surface of the air distributor body, a lower port of the cylindrical hole is connected to an upper edge of the hollow frustum, and wherein the hollow frustum serving as a connection portion of the gas-material mixture through hole is in communication with the outlets of the plurality of vent holes.

Further, the hollow frustum is provided as a sealing cap; the bottom of the gas-material mixture through hole is a flat surface which is provided as a material blocking platform; or the bottom surface of the air distributor body is a spherical arch face recessed towards the air distributor body.

Further, each vent hole comprises a diverging section, a vertical section and a horizontal section in sequence from the inlet thereof to the outlet thereof; or each vent hole comprises a diverging section and a horizontal section in sequence from the inlet thereof to the outlet thereof.

Compared to the prior art, according to one aspect of the present invention, by providing arrangement of winding paths of the vent holes of the air distributor and converging the outlets of the vent holes to the same large hole channel, the present invention enables a gas entering the gasifier to form a stepped constrained wind and effectively prevents solid-phase materials in the furnace chamber from leaking into the gas mixture chamber. According to another aspect of the present invention, by adopting the furnace chamber tapering from top to bottom and generating the stepped constrained wind with a higher flow rate in the middle, the present invention enables materials burnt within the furnace chamber to self-circulate within the furnace chamber and ensures a gasification temperature required for burning within the circulating fluidized bed gasifier. In this way, the internally self-circulating fluidized bed gasifier of the present invention can achieve self-circulation combustion gasification multiple times within the gasifier and has advantages such as well control of gasification temperature within the gasifier, a high coal gasification efficiency and no ash leakage.

### BRIEF DESCRIPTION OF THE DRAWING

To illustrate the technical solutions of the embodiments of the present invention more clearly, a brief introduction to the accompanying drawings required to describe the embodiments is given below. Obviously, the accompanying drawings in the description below are merely some embodiments of the present invention, based on which other drawings may also be obtained by those of ordinary skill in the art without any creative efforts. In the drawings:

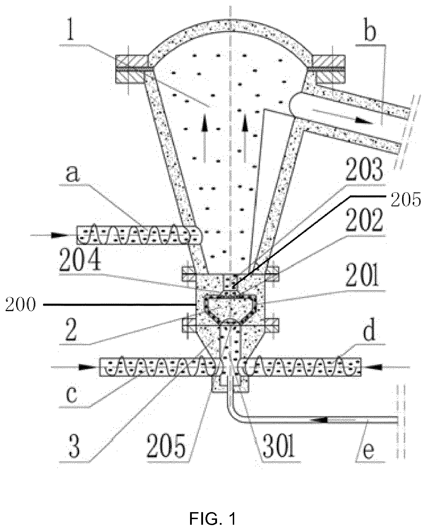

Figure 1 is a schematic longitudinal sectional view showing an internally self-circulating fluidized bed gasifier according to one embodiment of the present invention;
In the Figure: 1 denotes a furnace chamber; 2 denotes an air distributor for generating a stepped constrained wind; 3 denotes a pre-burning device; 201 denotes a plurality of vent holes; 202 denotes a material blocking platform; 203 denotes a gas-material mixture through hole; 204 denotes a sealing cap; 205 denotes a spherical arch face; 301 denotes a gas mixture chamber; 4 denotes a material guide platform; a denotes a coal transport pipe; b denotes a high temperature gas-material pipe; c a pulverized coal transport pipe; d denotes a carbon-containing fly ash transport pipe; e denotes a gasification agent pipe.

### DETAILED DESCRIPTION OF THE EMBODIMENTS

To make the above objectives, features and advantages of the present invention clearer and easier to understand, the present invention is further illustrated in detail below in connection with the accompanying drawings and specific implementations.

"One embodiment" or "an embodiment" referred to herein means a specific feature, structure or characteristic that may be included in at least one implementation of the present invention. "In one embodiment" throughout the specification refers to neither the same embodiment, nor a separate or optional embodiment contradictory to other embodiments. Unless especially stated, terms indicating an electrical connection such as connected, linked and joined all refer to a direct or indirect electrical connection.

The inventors have found that one of the ways to solve the first problem mentioned in the background is to repeatedly self-circulate, burn and gasify coal in the circulating fluidized bed gasifier. To achieve this purpose, it is required that a gas or a gas-material mixture entering the furnace chamber of the gasifier should be a stepped constrained wind that is non-uniform and can cause an internal circulation. However, various improvements made to existing air distributors are intended to uniformly introduce a gas from a gas chamber to a furnace chamber of the gasifier, such that the gas entering the furnace chamber of the gasifier is uniform throughout the gasifier. In addition, traditional air distributors also have a relatively serious ash leakage problem due to an unreasonable arrangement of a gas cap, which results in blockage of a gas chamber. To this end, new design requirements have been proposed for structures of existing air distributors.

Another way to solve the first problem mentioned in the background is to heat or pre-burn a gasification agent entering the circulating fluidized bed, such that a large amount of heat can be brought to the furnace chamber to increase a gasification temperature within the furnace chamber. A way to solve the second problem mentioned in the background is to design a differentiated air distributor. Therefore, before employing the newly designed combined gasifier that is a combination of a circulating fluidized bed and a pyrolysis and gasification bed, it is a must to design a gasifier that can cause repeated self-circulation, burning and gasification within the furnace chamber and an air distributor for generating a stepped constrained wind that matches the gasifier.

Refer to Figure 1, which illustrates a schematic longitudinal sectional view of an internally self-circulating fluidized bed gasifier according to one embodiment of the present invention. The internally self-circulating fluidized bed gasifier as shown in Figure 1 includes a gasifier body (not labeled) and a furnace inner chamber (not labeled) enclosed by the gasifier body. For example, the gasifier body is a housing and the furnace inner chamber is a cavity enclosed by the housing. The furnace inner chamber includes a furnace chamber 1 provided at an upper part and an air distributor 2 for generating a stepped constrained wind provided at a lower part of the furnace chamber 1. The internally self-circulating fluidized bed gasifier further includes a gas mixture chamber 301 provided at a lower part of the air distributor 2 for generating the stepped constrained wind. A top surface of the air distributor 2 covers a bottom port of the furnace chamber 1, and a bottom surface of the air distributor 2 serves as the top of the gas mixture chamber 301.

The furnace chamber 1 is introduced first. A coal transport pipe a is provided in the middle of the furnace chamber 1 and is in communication with the furnace chamber 1. A high temperature gas-material pipe b is provided at an upper part of the furnace chamber 1. An inlet of the high temperature gas-material pipe b is in communication with the furnace chamber 1, and an outlet of the high temperature gas-material pipe b is in communication with a subsequent device (not shown). The furnace chamber 1 may be of a structure tapering from top to bottom. In the embodiment as shown in Figure 1, the furnace chamber 1 is of an inverted frustum structure tapering from top to bottom. The top of the furnace chamber 1 is arranged to be of a spherical cap structure that is recessed upwardly. Refer to the following text for the reason why the furnace chamber 1 is arranged to take such shape.

A material guide platform 4 is provided within the furnace chamber 1 at the inlet of the high temperature gas-material pipe b. In the embodiment shown in Figure 1, a surface of the material guide platform 4 faces upward. An upper surface of the material guide platform 4 is an arc surface, which is connected to a lower part of an inner wall of the high temperature gas-material pipe b. In this way, materials within the furnace chamber 1 that fall on the material guide platform 4 can smoothly enter the subsequent device along the inner wall of the high temperature gas-material pipe b. In one preferred embodiment, a longitudinal section of the material guide platform 4 takes the shape of a part of a ring.

Next, the air distributor 2 for generating a stepped constrained wind is introduced. The air distributor 2 includes an air distributor body 200, a gas-material mixture through hole 203 and a plurality of vent holes 201 located within the air distributor body 200. The gas-material mixture through hole 203 extends from a top surface of the air distributor body 200 (which may also be referred to as the top surface of the air distributor 2) into the air distributor body 200, and the gas-material mixture through hole 203 is in communication with the bottom of the furnace chamber 1. Specifically, the gas-material mixture through hole 203 is located in the center of the bottom of the furnace chamber 1. Outlets at an upper end of the plurality of vent holes 201 are in communication with the bottom of the gas-material mixture through hole 203. Inlets at a lower end of the plurality of vent holes 201 are located at a bottom surface of the air distributor body 200 (which may also be referred to as the bottom surface of the air distributor 2), and the inlets at the lower end of the vent holes 201 are in communication with the gas mixture chamber 301. The vent holes 201 are designed to have winding paths.

In the embodiment shown in Figure 1, the gas-material mixture through hole 203 includes a cylindrical hole 205 and a hollow frustum 204 tapering from bottom to top. An upper port of the cylindrical hole 205 is located at the top surface of the air distributor body 200, and a lower port of the cylindrical hole 205 is connected to an upper edge of the frustum 204. The hollow frustum 204 serving as a connection portion of the gas-material mixture through hole 203 is in communication with the outlets of the plurality of vent holes 201. The frustum 204 may be provided as a sealing cap. The bottom of the gas-material mixture through hole 203 is a flat surface, which is provided as a material blocking platform 202. In the embodiment shown in Figure 1, the bottom surface of the air distributor 2 is a spherical arch face 205 which is recessed upwardly (or the bottom surface of the air distributor 2 is a spherical arch face recessed towards the air distributor body 200), that is, the top of the gas mixture chamber 301 is the spherical arch face 205 that is recessed upwardly.

In the embodiment shown in Figure 1, each vent hole 201 includes a diverging section, a vertical section and a horizontal section in sequence from the inlet thereof to the outlet thereof. In another embodiment, the vent hole 201 includes a diverging section and a horizontal section in sequence from the inlet thereof to the outlet thereof. That is, the vent holes 201 in the present invention only need to be designed to have winding paths. In one embodiment, inclinations of each of the various sections of the vent hole 201 may be designed according to requirements for a gas amount and a gas speed as well as a deposition speed, a diameter and/or a density of a solid-phase particle in the gasifier in which the air distributor 2 is located.

Finally, the gas mixture chamber 301 is introduced. In the embodiment shown in Figure 1, a pulverized coal transport pipe c and a carbon-containing fly ash transport pipe *d* are provided in the middle of the gas mixture chamber 301. The pulverized coal transport pipe c and the carbon-containing fly ash transport pipe d is in communication with the gas mixture chamber 301. A gasification agent pipe e is provided at the bottom of the gas mixture chamber 301, and the gasification agent pipe e is in communication with the gas mixture chamber 301. The gas mixture chamber 301 is configured for pre-burning, that is, a gasification agent, carbon-containing fly ash and pulverized coal may be pre-burnt in the gas mixture chamber 301. It should be specially noted that in other embodiments, only one pulverized coal transport pipe c or only one carbon-containing fly ash transport pipe d may be provided in communication with the gas mixture chamber 301.

For ease of understanding the present invention, working principles of the internally self-circulating fluidized bed gasifier of the present invention is introduced in detail below in connection with Figure 1.

The pulverized coal transport pipe *c* and the carbon-containing fly ash transport pipe d provided in the middle of the gas mixture chamber 301 respectively transport pulverized coal and carbon-containing fly ash to the gas mixture chamber 301. The gasification agent pipe e provided at the bottom of the gas mixture chamber 301 transports a gasification agent to the gas mixture chamber 301. The pulverized coal and the carbon-containing fly ash meet the gasification agent in the gas mixture chamber 301 and are then burnt and gasified. A high temperature gas-material mixture comprises the gasification agent and a coal gas with high temperature carbon-containing fly ash that is generated from pre-burning of the gasification agent, the carbon-containing fly ash and the pulverized coal. The high temperature gas-material mixture in the gas mixture chamber 301 enters the furnace chamber 1 via the air distributor 2 for generating the stepped constrained wind, thereby bringing a large amount of heat to the furnace chamber 1 to increase a gasification temperature in the furnace chamber 1.

Specifically, the gasification agent and the coal gas with high temperature fly ash that is generated from the pre-burning in the gas mixture chamber 301 enter the vent hole 201 via the inlet of the vent hole and are ejected from the outlet of the vent hole 201, and then enter the gas-material mixture through hole 203 for bundling and rushing to the furnace chamber 1 of the gasifier. Since the gas-material mixture through hole 203 has a relatively large diameter and a relatively large amount of gas flows through the gas-material mixture through hole 203, the gas-material mixture rushing to the furnace chamber 1 from the gas-material mixture through hole 203 has different flow rates, thereby forming a stepped constrained wind with a higher flow rate in the middle and a lower flow rate on the periphery. Therefore, the stepped constrained wind composed of the gasification agent and the coal gas with high temperature fly ash that enters the furnace chamber 1 rapidly flows upwardly within the furnace chamber 1 of the gasifier, and is quickly burnt, pyrolyzed and gasified when meeting the coal transported to the furnace chamber 1 via the coal transport pipe a provided in the middle of the furnace chamber 1.

Since it is the stepped constrained wind with a higher flow rate in the middle and a lower flow rate on the periphery that enters the furnace chamber 1, and the furnace chamber 1 is of a specially designed inverted frustum structure tapering from top to bottom, an internal circulation phenomenon in the shape of a chrysanthemum (or a fountain) from top to bottom is generated by the materials and gas stream in the furnace chamber 1 of the gasifier, thereby realizing repeated circulation, burning, pyrolysis and gasification of the coal in the furnace chamber 1 of the gasifier, ensuring the gasification temperature within the furnace chamber, and increasing the coal gasification efficiency. In addition, due to the air distributor 2, the middle of the high temperature gas-material mixture entering the furnace chamber 1 of the circulating fluidized bed gasifier is a high speed gas stream, which blows up materials with a larger diameter that fall into the gas-material mixture through hole 203, so that they move fast upwardly with the gas stream. After a plurality of circulations, the materials finally enter the subsequent device via the high temperature gas-material pipe b, thereby solving the problem in the existing circulating fluidized beds that non-coal substances with higher mass tend to be retained at the bottom of the gasifier.

It should be particularly noted that the air distributor 2 may be made of a non-metal high temperature resistant material. The air distributor 2 and a wall of the gasifier may be designed to be integrally structured. The air distributor and the wall of the gasifier may also be separately formed and bonded to each other.

To sum up, the gas mixture chamber 301 provided in the present invention can heat or pre-burn the gasification agent entering the circulating fluidized bed, thereby bringing a large amount of heat to the furnace chamber 1 to increase the gasification temperature within the furnace chamber 1. By arranging the vent holes 201 of the air distributor 2 to have winding paths and converging the outlets of the vent holes 201 to the same large hole channel (that is, the gas-material mixture through hole 203), the present invention enables the gas entering the furnace chamber 1 to form the stepped constrained wind, and effectively prevents solid-phase materials within the furnace chamber 1 from leaking into the gas chamber. With the design of the air distributor 2 and the design of the furnace chamber that adopts the inverted frustum structure tapering from top to bottom, the internally self-circulating fluidized bed gasifier in the present invention realizes an internal circulation in which a middle constrained gas stream flows upwardly and a peripheral gas stream overflows downwardly within the furnace chamber 1, thereby achieving repeated circulation, burning, pyrolysis and gasification of the coal within the furnace chamber 1 of the gasifier, ensuring the gasification temperature within the furnace chamber 1, and increasing the coal gasification efficiency. In addition, with the design of the air distributor 2, the middle of the high temperature gas-material mixture entering the furnace chamber 1 of the circulating fluidized bed gasifier is a high speed gas stream, which blows up materials with a larger diameter and higher mass that fall into the gas-material mixture through hole 203, so that they move fast upwardly with the gas stream. After a plurality of circulations, the materials finally enter the subsequent device via the high temperature gas-material pipe *b*.

In the present invention, unless especially stated, terms indicating a connection such as "connected", "joined", "linked" and "coupled" indicate a direct or indirect connection.

## Claims

1. An air distributor (2) for generating a stepped constrained wind in a circulating fluidized bed gasifier with a higher flow rate in the middle and a lower flow rate on the periphery, such that an internally circulating flow is formed within the furnace chamber (1) in which a middle constrained gas stream moves upwardly and a periphery gas stream overflows downwardly, the air distributor (2) comprising: an air distributor body, a gas-material mixture through hole (203) and a plurality of vent holes (201) located within the air distributor body,
the gas-material mixture through hole extending from a top surface of the air distributor body into the air distributor body, outlets of the plurality of vent holes being in communication with a bottom of the gas-material mixture through hole, and inlets of the plurality of vent holes being located at a bottom surface of the air distributor body,
**characterized in that**
the vent holes are designed to have winding paths.

2. The air distributor for generating a stepped constrained wind of claim 1, wherein the gas-material mixture through hole comprises a cylindrical hole and a hollow frustum tapering from bottom to top, an upper port of the cylindrical hole is located at the top surface of the air distributor body, and a lower port of the cylindrical hole is connected to an upper edge of the hollow frustum, and wherein the hollow frustum serving as a connection portion of the gas-material mixture through hole is in communication with the outlets of the plurality of vent holes.

3. The air distributor for generating a stepped constrained wind of claim 2, wherein
the hollow frustum is provided as a sealing cap (204);
the bottom of the gas-material mixture through hole is a flat surface which is provided as a material blocking platform (202); or
the bottom surface of the air distributor body is a spherical arch face recessed towards the air distributor body.

4. The air distributor for generating a stepped constrained wind of claim 1, wherein
each vent hole comprises an oblique diverging section, a vertical section and a horizontal section in sequence from the inlet thereof to the outlet thereof; or each vent hole comprises an oblique diverging section and a horizontal section in sequence from the inlet thereof to the outlet thereof.

5. The air distributor for generating a stepped constrained wind of claim 4, wherein inclination of each of the sections of the vent hole is designed according to requirements for a gas amount and a gas speed, as well as a deposition speed, a diameter and/or a density of a solid-phase particle in the circulating fluidized bed gasifier.

6. An internally self-circulating fluidized bed gasifier, comprising a gasifier body and a furnace inner chamber enclosed by the gasifier body, the furnace inner chamber comprising a furnace chamber (1) provided at an upper part thereof and the air distributor according to claim 1 provided at a lower part of the furnace chamber,
the internally self-circulating fluidized bed gasifier further comprising a gas mixture chamber (301) provided at a lower part of the air distributor,
the gas-material mixture through hole being in communication with the bottom of the furnace chamber, and the inlets of the vent holes being in communication with the gas mixture chamber.

7. The internally self-circulating fluidized bed gasifier of claim 6, wherein
the gas-material mixture through hole is located in the center of the bottom of the furnace chamber;
the furnace chamber is of an inverted frustum structure tapering from top to bottom; or the gas mixture chamber is configured for pre-burning.

8. The internally self-circulating fluidized bed gasifier of claim 6, further comprising a coal transport pipe (a) provided in the middle of the furnace chamber and a high temperature gas-material pipe (b) provided at an upper part of the furnace chamber, and wherein
the coal transport pipe is in communication with the furnace chamber, an inlet of the high temperature gas-material pipe is in communication with the furnace chamber, and an outlet of the high temperature gas-material pipe is in communication with a subsequent device.

9. The internally self-circulating fluidized bed gasifier of claim 8, further comprising a material guide platform (4) provided within the furnace chamber and located at the inlet of the high temperature gas-material pipe, and wherein
a surface of the material guide platform faces upward, an upper surface of the material guide platform is an arc surface, and the arc surface is connected to a lower part of an inner wall of the high temperature gas-material pipe, such that materials within the furnace chamber that fall on the material guide platform can smoothly enter the subsequent device along the inner wall of the high temperature gas-material pipe.

10. The internally self-circulating fluidized bed gasifier of claim 6, further comprising a gasification agent pipe (e) which is in communication with the gas mixture chamber and is configured to introducing a gasification agent to the gas mixture chamber.

11. The internally self-circulating fluidized bed gasifier of claim 10, further comprising a pulverized coal transport pipe (c) and/or a carbon-containing fly ash transport pipe (d) in communication with the gas mixture chamber, and wherein
the pulverized coal transport pipe is configured to transport pulverized coal to the gas mixture chamber;
the carbon-containing fly ash transport pipe is configured to transport carbon-containing fly ash to the gas mixture chamber, and
the high temperature gas-material mixture comprises the gasification agent and a coal gas with high temperature carbon-containing fly ash that is generated from pre-burning of the gasification agent, the carbon-containing fly ash and the pulverized coal.

12. The internally self-circulating fluidized bed gasifier of claim 6, wherein
the gas-material mixture through hole comprises a cylindrical hole and a hollow frustum tapering from bottom to top, an upper port of the cylindrical hole is located at the top surface of the air distributor body, a lower port of the cylindrical hole is connected to an upper edge of the hollow frustum, and wherein the hollow frustum serving as a connection portion of the gas-material mixture through hole is in communication with the outlets of the plurality of vent holes.

13. The internally self-circulating fluidized bed gasifier of claim 12, wherein
the hollow frustum is provided as a sealing cap (204);
the bottom of the gas-material mixture through hole is a flat surface which is provided as a material blocking platform; or
the bottom surface of the air distributor body is a spherical arch face (205) recessed towards the air distributor body.

14. The internally self-circulating fluidized bed gasifier of claim 6, wherein
each vent hole comprises an oblique diverging section, a vertical section and a horizontal section in sequence from the inlet thereof to the outlet thereof; or
each vent hole comprises an oblique diverging section and a horizontal section in sequence from the inlet thereof to the outlet thereof.

15. A method of operating the internally self-circulating fluidized bed gasifier of claim 7, wherein
a high temperature gas-material mixture generated from pre-burning within the gas mixture chamber enters the vent holes via the inlets at a lower end of the vent holes firstly, is ejected from the outlets at an upper end of the vent holes subsequently, and then enters the gas-material mixture through hole for bundling and rushing to the furnace chamber, and wherein the high temperature gas-material mixture entering the furnace chamber from the gas-material mixture through hole forms a stepped constrained wind with a higher flow rate in the middle and a lower flow rate on the periphery, such that an internally circulating flow is formed within the furnace chamber in which a middle constrained gas stream moves upwardly and a periphery gas stream overflows downwardly.

## Patentansprüche

1. Luftverteiler (2) zum Erzeugen eines abgestuften eingeschränkten Winds in einem Vergaser mit zirkulierender Wirbelschicht mit einer höheren Strömungsrate in der Mitte und einer niedrigeren Strömungsrate an dem Umfang, sodass eine intern zirkulierende Strömung innerhalb der Ofenkammer (1) gebildet wird, in welcher sich ein in der Mitte eingeschränkter Gasstrom aufwärts bewegt und ein Umfang-Gasstrom abwärts überströmt, wobei der Luftverteiler (2) umfasst: einen Luftverteilerkörper, ein Gasmaterialgemisch-Durchgangsloch (203) und mehrere Entlüftungslöcher (201), welche sich innerhalb des Luftverteilerkörpers befinden,
wobei sich das Gasmaterialgemisch-Durchgangsloch von einer Deckfläche des Luftverteilerkörpers in den Luftverteilerkörper erstreckt, wobei Auslässe der mehreren Entlüftungslöcher mit einem Boden des Gasmaterialgemisch-Durchgangslochs in Verbindung stehen und wobei sich Einlässe der mehreren Entlüftungslöcher an einer Bodenfläche des Luftverteilerkörpers befinden,
**dadurch gekennzeichnet, dass**
die Entlüftungslöcher ausgelegt sind, um gewundene Pfade aufzuweisen.

2. Luftverteiler zum Erzeugen eines abgestuften eingeschränkten Winds nach Anspruch 1, wobei das Gasmaterialgemisch-Durchgangsloch ein zylindrisches Loch und einen hohlen Kegelstumpf, welcher sich von unten nach oben verjüngt, umfasst, wobei sich eine obere Öffnung des zylindrischen Lochs an der Deckfläche des Luftverteilerkörpers befindet und wobei eine untere Öffnung des zylindrischen Lochs mit einem oberen Rand des hohlen Kegelstumpfs verbunden ist, und wobei der hohle Kegelstumpf, welcher als Verbindungsabschnitt des Gasmaterialgemisch-Durchgangslochs dient, mit den Auslässen der mehreren Entlüftungslöcher in Verbindung steht.

3. Luftverteiler zum Erzeugen eines abgestuften eingeschränkten Winds nach Anspruch 2, wobei
der hohle Kegelstumpf als Verschlusskappe (204) vorgesehen ist;
wobei der Boden des Gasmaterialgemisch-Durchgangslochs eine flache Fläche ist, die als Material blockierende Plattform (202) vorgesehen ist; oder
wobei die Bodenfläche des Luftverteilerkörpers eine kugelförmige Bogenfläche ist, die hin zu dem Luftverteilerkörper vertieft ist.

4. Luftverteiler zum Erzeugen eines abgestuften eingeschränkten Winds nach Anspruch 1, wobei jedes Entlüftungsloch in einer Reihenfolge von seinem Einlass zu seinem Auslass einen schrägen divergierenden Abschnitt, einen vertikalen Abschnitt und einen horizontalen Abschnitt umfasst; oder
wobei jedes Entlüftungsloch in einer Reihenfolge von seinem Einlass zu seinem Auslass einen schrägen divergierenden Abschnitt und einen horizontalen Abschnitt umfasst.

5. Luftverteiler zum Erzeugen eines abgestuften eingeschränkten Winds nach Anspruch 4, wobei eine Neigung jedes der Abschnitte des Entlüftungslochs gemäß Anforderungen für eine Gasmenge und eine Gasgeschwindigkeit sowie eine Abscheidungsgeschwindigkeit, einen Durchmesser und/oder eine Dichte eines Festphasenteilchens in dem Vergaser mit zirkulierender Wirbelschicht ausgelegt ist.

6. Vergaser mit intern selbstzirkulierender Wirbelschicht, umfassend einen Vergaserkörper und eine Ofeninnenkammer, welche von dem Vergaserkörper eingeschlossen ist, wobei die Ofeninnenkammer eine Ofenkammer (1), welche an ihrem oberen Teil vorgesehen ist, und den Luftverteiler nach Anspruch 1, welcher an einem unteren Teil der Ofenkammer vorgesehen ist, umfasst,
wobei der Vergaser mit intern selbstzirkulierender Wirbelschicht ferner eine Gasgemischkammer (301) umfasst, welche an einem unteren Teil des Luftverteilers vorgesehen ist,
wobei das Gasmaterialgemisch-Durchgangsloch mit dem Boden der Ofenkammer in Verbindung steht und die Einlässe der Entlüftungslöcher mit der Gasgemischkammer in Verbindung stehen.

7. Vergaser mit intern selbstzirkulierender Wirbelschicht nach Anspruch 6, wobei sich das Gasmaterialgemisch-Durchgangsloch in der Mitte des Bodens der Ofenkammer befindet;
wobei die Ofenkammer von einer umgekehrten Kegelstumpfstruktur ist, welche sich von oben nach unten verjüngt; oder
wobei die Gasgemischkammer zum Vorbrennen eingerichtet ist.

8. Vergaser mit intern selbstzirkulierender Wirbelschicht nach Anspruch 6, ferner umfassend ein Kohletransportrohr (a), das in der Mitte der Ofenkammer vorgesehen ist, und ein Hochtemperatur-Gasmaterialrohr (b), das an einem oberen Teil der Ofenkammer vorgesehen ist, und wobei
das Kohletransportrohr mit der Ofenkammer in Verbindung steht, wobei ein Einlass des Hochtemperatur-Gasmaterialrohrs mit der Ofenkammer in Verbindung steht und wobei ein Auslass des Hochtemperatur-Gasmaterialrohrs mit einer nachfolgenden Vorrichtung in Verbindung steht.

9. Vergaser mit intern selbstzirkulierender Wirbelschicht nach Anspruch 8, ferner umfassend eine Materialführungsplattform (4), die innerhalb der Ofenkammer vorgesehen ist und sich an dem Einlass des Hochtemperatur-Gasmaterialrohrs befindet, und wobei
eine Fläche der Materialführungsplattform nach oben gewandt ist, wobei eine obere Fläche der Materialführungsplattform eine Bogenfläche ist und wobei die Bogenfläche mit einem unteren Teil einer inneren Wand des Hochtemperatur-Gasmaterialrohrs verbunden ist, sodass Materialien innerhalb der Ofenkammer, welche auf die Materialführungsplattform fallen, reibungslos in die nachfolgende Vorrichtung entlang der inneren Wand des Hochtemperatur-Gasmaterialrohrs eintreten können.

10. Vergaser mit intern selbstzirkulierender Wirbelschicht nach Anspruch 6, ferner umfassend ein Vergasungsmittelrohr (e), das mit der Gasgemischkammer in Verbindung steht und eingerichtet ist, um ein Vergasungsmittel in die Gasgemischkammer einzuführen.

11. Vergaser mit intern selbstzirkulierender Wirbelschicht nach Anspruch 10, ferner umfassend ein Kohlenstaubtransportrohr (c) und/oder ein Kohlenstoff-enthaltende-Flugasche-Transportrohr (d) in Verbindung mit der Gasgemischkammer, und wobei
das Kohlenstaubtransportrohr eingerichtet ist, um Kohlenstaub in die Gasgemischkammer zu transportieren;
wobei das Kohlenstoff-enthaltende-Flugasche-Transportrohr eingerichtet ist, um Kohlenstoff enthaltende Flugasche in die Gasgemischkammer zu transportieren, und wobei das Hochtemperatur-Gasmaterialgemisch das Vergasungsmittel und ein Kohlengas mit Kohlenstoff enthaltener Hochtemperatur-Flugasche umfasst, welche aus einem Vorbrennen des Vergasungsmittels, der Kohlenstoff enthaltenden Flugasche und des Kohlenstaubs erzeugt wird.

12. Vergaser mit intern selbstzirkulierender Wirbelschicht nach Anspruch 6, wobei
das Gasmaterialgemisch-Durchgangsloch ein zylindrisches Loch und einen hohlen Kegelstumpf, welcher sich von unten nach oben verjüngt, umfasst, wobei sich eine obere Öffnung des zylindrischen Lochs an der Deckfläche des Luftverteilerkörpers befindet, wobei eine untere Öffnung des zylindrischen Lochs mit einem oberen Rand des hohlen Kegelstumpfs verbunden ist, und wobei der hohle Kegelstumpf, welcher als Verbindungsabschnitt des Gasmaterialgemisch-Durchgangslochs dient, mit den Auslässen der mehreren Entlüftungslöcher in Verbindung steht.

13. Vergaser mit intern selbstzirkulierender Wirbelschicht nach Anspruch 12, wobei der hohle Kegelstumpf als Verschlusskappe (204) vorgesehen ist;
wobei der Boden des Gasmaterialgemisch-Durchgangslochs eine flache Fläche ist, welche als Material blockierende Plattform vorgesehen ist; oder
wobei die Bodenfläche des Luftverteilerkörpers eine kugelförmige Bogenfläche (205) ist, die hin zu dem Luftverteilerkörper vertieft ist.

14. Vergaser mit intern selbstzirkulierender Wirbelschicht nach Anspruch 6, wobei jedes Entlüftungsloch in einer Reihenfolge von seinem Einlass zu seinem Auslass einen schrägen divergierenden Abschnitt, einen vertikalen Abschnitt und einen horizontalen Abschnitt umfasst; oder
wobei jedes Entlüftungsloch in einer Reihenfolge von seinem Einlass zu seinem Auslass einen schrägen divergierenden Abschnitt und einen horizontalen Abschnitt umfasst.

15. Verfahren zum Betreiben des Vergasers mit intern selbstzirkulierender Wirbelschicht nach Anspruch 7, wobei
ein Hochtemperatur-Gasmaterialgemisch, welches aus einem Vorbrennen innerhalb der Gasgemischkammer erzeugt wird, zuerst in die Entlüftungslöcher über die Einlässe an einem unteren Ende der Entlüftungslöcher eintritt, nachfolgend aus den Auslässen an einem oberen Ende der Entlüftungslöcher ausgestoßen wird und dann in das Gasmaterialgemisch-Durchgangsloch zum Bündeln und Rauschen in die Ofenkammer eintritt, und wobei das Hochtemperatur-Gasmaterialgemisch, welches in die Ofenkammer aus dem Gasmaterialgemisch-Durchgangsloch eintritt, einen abgestuften eingeschränkten Wind mit einer höheren Strömungsrate in der Mitte und einer niedrigeren Strömungsrate an dem Umfang bildet, sodass eine intern zirkulierende Strömung innerhalb der Ofenkammer gebildet wird, in welcher sich ein in der Mitte eingeschränkter Gasstrom aufwärts bewegt und ein Umfang-Gasstrom abwärts überströmt.

## Revendications

1. Distributeur d'air (2) pour générer un vent forcé étagé dans un gazéifieur à lit fluidisé à circulation avec un débit plus élevé au centre et un débit plus faible sur la périphérie, de telle sorte qu'un flux circulant intérieurement est formé à l'intérieur de la chambre de four (1) dans laquelle un flux gazeux forcé central se déplace vers le haut et un flux gazeux périphérique circule en trop-plein vers le bas, le distributeur d'air (2) comprenant : un corps de distributeur d'air, un trou traversant de mélange de matières gazeuses (203) et une pluralité de trous d'aération (201) situés à l'intérieur du corps de distributeur d'air,
le trou traversant de mélange de matières gazeuses s'étendant d'une surface supérieure du corps de distributeur d'air jusque dans le corps de distributeur d'air, des sorties de la pluralité de trous d'aération étant en communication avec un fond du trou traversant de mélange de matières gazeuses, et des entrées de la pluralité de trous d'aération étant situées sur une surface inférieure du corps de distributeur d'air,
**caractérisé en ce que**
les trous d'aération sont conçus pour avoir des trajets sinueux.

2. Distributeur d'air pour générer un vent forcé étagé selon la revendication 1, dans lequel le trou traversant de mélange de matières gazeuses comprend un trou cylindrique et un tronc creux conique du bas vers le haut, un port supérieur du trou cylindrique est situé sur la surface supérieure du corps de distributeur d'air, et un port inférieur du trou cylindrique est relié à un bord supérieur du tronc creux, et dans lequel le tronc creux servant en tant que partie de connexion du trou traversant de mélange de matières gazeuses est en communication avec les sorties de la pluralité de trous d'aération.

3. Distributeur d'air pour générer un vent forcé étagé selon la revendication 2, dans lequel
le tronc creux est prévu en tant qu'un bouchon de scellement (204) ;
le fond du trou traversant de mélange de matières gazeuses est une surface plane qui est prévue en tant qu'une plateforme de blocage de matières (202) ; ou
la surface inférieure du corps de distributeur d'air est une face d'arc sphérique en creux en direction du corps de distributeur d'air.

4. Distributeur d'air pour générer un vent forcé étagé selon la revendication 1, dans lequel chaque trou d'aération comprend une section bifurquant de façon oblique, une section verticale et une section horizontale en séquence depuis l'entrée de celle-ci vers la sortie de celle-ci ; ou
chaque trou d'aération comprend une section bifurquant de façon oblique et une section horizontale en séquence depuis l'entrée de celle-ci vers la sortie de celle-ci.

5. Distributeur d'air pour générer un vent forcé étagé selon la revendication 4, dans lequel l'inclinaison de chacune des sections du trou d'aération est conçue selon les exigences pour une quantité de gaz et une vitesse de gaz, ainsi qu'une vitesse de dépôt, un diamètre et/ou une densité d'une particule en phase solide dans le gazéifieur à lit fluidisé à circulation.

6. Gazéifieur à lit fluidisé à auto-circulation interne, comprenant un gaz de gazéifieur et une chambre intérieure de four entourée par le corps de gazéifieur, la chambre intérieure de four comprenant une chambre de four (1) prévue sur une partie supérieure de celui-ci et le distributeur d'air selon la revendication 1 prévu sur une partie inférieure de la chambre de four,
le gazéifieur à lit fluidisé à auto-circulation interne comprenant en outre une chambre de mélange gazeux (301) prévue à une partie inférieure du distributeur d'air,
le trou traversant de mélange de matières gazeuses étant en communication avec le fond de la chambre de four, et les entrées des trous d'aération étant en communication avec la chambre de mélange gazeux.

7. Gazéifieur à lit fluidisé à auto-circulation interne selon la revendication 6, dans lequel
le trou traversant de mélange de matières gazeuses est situé dans le centre du fond de la chambre de four ;
la chambre de four est d'une structure de tronc inversé conique du haut vers le bas ; ou
la chambre de mélange gazeux est configurée pour la pré-combustion.

8. Gazéifieur à lit fluidisé à auto-circulation interne selon la revendication 6, comprenant en outre un tuyau de transport de charbon (a) prévu au centre de la chambre de four et un tuyau de matières gazeuses à haute température (b) prévu à une partie supérieure de la chambre de four, et dans lequel
le tuyau de transport de charbon est en communication avec la chambre de four, une entrée du tuyau de matières gazeuses à haute température est en communication avec la chambre de four, et une sortie du tuyau de matières gazeuses à haute température est en communication avec un dispositif consécutif.

9. Gazéifieur à lit fluidisé à auto-circulation interne selon la revendication 8, comprenant en outre une plateforme de guidage de matières (4) prévue à l'intérieur de la chambre de four et située à l'entrée du tuyau de matières gazeuses à haute température, et dans lequel
une surface de la plateforme de guidage de matières est orientée vers le haut, une surface supérieure de la plateforme de guidage de matières est une surface arquée, et la surface arquée est reliée à une partie inférieure d'une paroi intérieure du tuyau de matières gazeuses à haute température de façon à ce que les matières à l'intérieur de la chambre de four qui tombent sur la plateforme de guidage de matières puissent pénétrer doucement dans le dispositif consécutif le long de la paroi intérieure du tuyau de matières gazeuses à haute température.

10. Gazéifieur à lit fluidisé à auto-circulation interne selon la revendication 6, comprenant en outre un tuyau d'agent de gazéification (e) qui est en communication avec la chambre de mélange gazeux et est configuré pour introduire un agent de gazéification à la chambre de mélange gazeux.

11. Gazéifieur à lit fluidisé à auto-circulation interne selon la revendication 10, comprenant en outre un tuyau de transport de charbon pulvérisé (c) et/ou un tuyau de transport de cendres volantes contenant du carbone (d) en communication avec la chambre de mélange de gaz, et dans lequel
le tuyau de transport de charbon pulvérisé est configuré pour transporter du charbon pulvérisé vers la chambre de mélange gazeux ;
le tuyau de transport de cendres volantes contenant du carbone est configuré pour transporter des cendres volantes contenant du carbone vers la chambre de mélange gazeux, et
le mélange de matières gazeuses à haute température comprend l'agent de gazéification et un gaz de houille avec de la cendre volante contenant du carbone à haute température qui est généré de la pré-combustion de l'agent de gazéification, la cendre volante contenant du carbone et le charbon pulvérisé.

12. Gazéifieur à lit fluidisé à auto-circulation interne selon la revendication 6, dans lequel
le trou traversant de mélange de matières gazeuses comprend un trou cylindrique et un tronc creux conique du bas vers le haut, un port supérieur du trou cylindrique est situé sur la surface supérieure du corps de distributeur d'air, un port inférieur du trou cylindrique est relié à un bord supérieur du tronc creux, et dans lequel le tronc creux servant en tant que partie de connexion du trou traversant de mélange de matières gazeuses est en communication avec les sorties de la pluralité de trous d'aération.

13. Gazéifieur à lit fluidisé à auto-circulation interne selon la revendication 12, dans lequel le tronc creux est prévu en tant qu'un bouchon de scellement (204) ;
le fond du trou traversant de mélange de matières gazeuses est une surface plane qui est prévue en tant qu'une plateforme de blocage de matière ; ou
la surface inférieure du corps de distributeur d'air est une face d'arc sphérique (205) en creux en direction du corps de distributeur d'air.

14. Gazéifieur à lit fluidisé à auto-circulation interne selon la revendication 6, dans lequel
chaque trou d'aération comprend une section bifurquant de façon oblique, une section verticale et une section horizontale en séquence depuis l'entrée de celle-ci vers la sortie de celle-ci ; ou
chaque trou d'aération comprend une section bifurquant de façon oblique et une section horizontale en séquence depuis l'entrée de celle-ci vers la sortie de celle-ci.

15. Procédé pour le fonctionnement du gazéifieur à lit fluidisé à auto-circulation interne selon la revendication 7, dans lequel
un mélange de matières gazeuses à haute température généré par la précombustion à l'intérieur de la chambre de mélange gazeux pénètre dans les trous d'aération par le biais des entrées à une extrémité inférieure des trous d'aération en premier, est éjecté des sorties à une extrémité supérieure des trous d'aération ensuite, puis re-pénètre le trou traversant de mélange de matières gazeuses pour se grouper et se précipiter vers la chambre de four, et dans lequel le mélange de matières gazeuses à haute température pénétrant la chambre de four depuis le trou traversant de mélange de matières gazeuses forme un vent forcé étagé avec un débit plus élevé au centre et un débit plus faible sur la périphérie, de telle sorte qu'un flux circulant intérieurement est formé à l'intérieur de la chambre de four dans laquelle un flux gazeux forcé central se déplace vers le haut et un flux gazeux périphérique circule en trop-plein vers le bas.
